# EUROPÄISCHE PATENTSCHRIFT

(11) **EP 1 529 668 B1**
(45) Veröffentlichungstag und Bekanntmachung des Hinweises auf die Patenterteilung: **19.10.2011**
(21) Anmeldenummer: 04025672.9
(22) Anmeldetag: 28.10.2004
(51) Int. Cl.: B60D 1/60, B60D 1/64

(54) **Kombiträgersystem für Kraftfahrzeuganhänger**
Combined holder for trailer
Support multiple pour remorques

(30) Priorität: 06.11.2003 DE 20317055 U
(43) Veröffentlichungstag der Anmeldung: 11.05.2005
(73) Patentinhaber: AL-KO Kober AG, 89359 Kötz (DE)
(72) Erfinder: Nauder, Kurt, 82276 Adelshofen (DE)
(74) Vertreter: Strobel, Wolfgang

(56) Entgegenhaltungen:
- DE-A1- 4 434 412
- DE-U- 7 113 009
- US-A- 4 770 644
- US-A- 5 766 020
- US-A1- 2003 020 256

## Beschreibung

Die vorliegende Erfindung betrifft ein Kombiträgersystem für Kraftfahrzeuganhänger, das zur Aufnahme sowohl für elektrische Anschlußstecker von Kraftfahrzeuganhängern als auch für Schutzkappen von Anhängerkupplungen dient.

Zur Übertragung von elektrischen Signalen und Strom vom Kraftfahrzeug auf Anhänger werden elektrische Kabel verwendet, die einen Anschlußstecker auf der Kraftfahrzeugseite und auf der Anhängerseite aufweisen. Gebräuchlich sind hierbei beispielsweise siebenpolige Stecker nach alter deutscher Norm sowie dreizehn-polige Stecker nach neuer europäischer Norm. Im Ruhezustand des Anhängers besteht das Problem, den Anschlußstecker des Anhängers zu verstauen, damit er nicht den Boden berührt und insbesondere einer Verschmutzung ausgesetzt ist.

Ein Lösungsvorschlag des Standes der Technik besteht darin, eine am Anhänger drehbare schräg angebrachte Hülse vorzusehen, die zwei unterschiedliche Innenöffnungen aufweist, zur Aufnahme der unterschiedliche Außendurchmesser aufweisenden Anschlußstecker. Diese Aufnahmehülse weist jedoch den Nachteil auf, dass sich die Hülse nach mehrmaliger Benutzung lockern und verdrehen kann, so dass der Anschlußstecker sich aus der Hülse herausbewegen kann.

Andererseits weisen herkömmliche Anhängerkupplungen, insbesondere für Personenkraftwagen, einen gebogenen Arm mit einem kugelförmigen Kopf auf, auf den üblicherweise eine Kappe zur Abdeckung gegen Schmutz aufgebracht wird, wenn die Anhängerkupplung nicht benutzt wird. Aus der EP 0 937 593 ist ein Schutzkappenträgersystem bekannt, das einen Schutzkappenträger mit einem pilzförmigen Außenumfang aufweist, der zur Aufnahme und Lagesicherung einer Schutzkappe der Anhängerkupplung dient. Der Schutzkappenträger weist einen zylinderförmigen Basisabschnitt auf, in dem, dem Kopfabschnitt entgegengesetzten Endabschnitt des Basisabschnitts wenigstens zwei einander gegenüberliegende schlitzförmige Öffnungen vorgesehen sind, die zur Aufnahme einer Schlauchklemme dienen, mit der der Schutzkappenträger an der Deichsel des Anhängers befestigbar ist.

Der vorliegenden Erfindung liegt die Aufgabe zugrunde, ein Kombiträgersystem für Kraftfahrzeuganhänger zu schaffen, das wahlweise sowohl zur Aufnahme von verschiedenen Anschlußsteckern von elektrischen Anschlußkabeln von Kraftfahrzeuganhängern als auch zur Aufnahme von Schutzkappen von Anhängerkupplungen dient.

Diese Aufgabe wird durch die Merkmale des Anspruchs 1 gelöst.

Erfindungsgemäß weist das Kombiträgersystem für Kraftfahrzeuganhänger einen hülsenförmigen Aufnahmekörper auf, der einen zylinderförmigen Basisabschnitt und einen Kopfabschnitt aufweist, der eine pilzförmige Außenkontur aufweist, welche zur Aufnahme einer Schutzkappe für die Anhängerkupplung dient, wobei der hülsenförmige Aufnahmekörper eine zumindest teilweise an die Außenkontur von elektrischen Anschlußsteckern von Kraftfahrzeuganhängern angepaßte Innenkontur aufweist und der Basisabschnitt mit einem Kraftfahrzeuganhänger verbindbar ist.

Dadurch wird vorteilhafterweise erreicht, dass auf das Kombiträgersystem sowohl eine Schutzkappe für die Anhängerkupplung aufgesteckt und lagegesichert werden kann als auch übliche Anschlußstecker in den Aufnahmekörper von oben eingesteckt werden können.

Besonders vorteilhaft wird mit der vorliegenden Erfindung dem Sicherheitsaspekt Rechnung getragen, dass, nach Anhängen des Kraftfahrzeuganhängers an der Kupplung des Kraftfahrzeugs, die Bedienungsperson zum Verstauen der von der Anhängerkupplung abgezogenen Schutzkappe, zunächst den im Kombiträgersystem gelagerten elektrischen Anschlußstecker aus diesem herausziehen und mit dem Kraftfahrzeug verbinden und danach die Schutzkappe auf das Kombiträgersystem zu dessen Verstauen aufsetzen wird. Damit wird sichergestellt, dass eine elektrische Verbindung zur Übertragung der entsprechenden Signale auf den Kraftfahrzeuganhänger gewährleistet wird.

Vorteilhafterweise weist der Kopfabschnitt einen ersten Abschnitt auf, dessen Innendurchmesser im wesentlichen gleich groß wie der Innendurchmesser des Basisabschnitts ist und weist wenigstens einen weiteren, zweiten Abschnitt auf, dessen Innendurchmesser größer als der des Basisabschnitts ist. Sowohl der kleinere als auch der größere Innendurchmesser sind dabei so ausgelegt, dass sie zur Aufnahme von zwei unterschiedlichen elektrischen Anschlußsteckern dienen.

Darüber hinaus gibt es auch elektrische Anschlußstecker die einen noch größeren Außendurchmesser bzw. eine konische Form aufweisen, so dass vorteilhafterweise der Kopfabschnitt einen dritten Abschnitt aufweist, dessen Innendurchmesser größer ist als der des zweiten Abschnitts.

Vorteilhafterweise weist der Basisabschnitt eine Bodenwand auf, die ihrerseits eine zentrale Innenöffnung aufweist, die für den Durchtritt eines Befestigungsmittels dient. Als Befestigungsmittel kann beispielsweise eine Schraube oder ein Großkopfniet dienen, wobei der größere Kopf eine Verteilung der auftretenden Zugkräfte auf eine größere Fläche der Bodenwand ermöglicht.

Weiterhin ist vorteilhafterweise in der Unterseite der Bodenwand des Basisabschnitts eine Ausnehmung vorgesehen, die zur Aufnahme eines Endabschnitts einer Verbindungslasche dient, die ihrerseits zur Verbindung des Basisabschnitts mit einem Kraftfahrzeuganhänger dient. Die Ausnehmung kann beispielsweise nutförmig sein, mit parallelen Seitenabschnitten, die zur Führung des Endabschnitts der Verbindungslasche dienen.

Vorteilhafterweise weist der Basisabschnitt in seiner Seitenwand in der Nähe der Bodenwand wenigstens eine, vorzugsweise rechteckige Öffnung auf. Die Öffnung ist vorteilhafterweise dabei mit der Ausnehmung des Basisabschnitts fluchtend angeordnet.

Weiterhin ist vorteilhaft, dass der Aufnahmekörper in seiner Montagestellung am Kraftfahrzeuganhänger schräg angeordnet ist. Insbesondere bei kurzen Ausführungsformen des Zugmauls dient die schräge Anordnung vorteilhafterweise dazu, dass durch das Kombiträgersystem keine Behinderung bei Betätigung des Griffs des Zugmauls zur Verriegelung bzw. Entriegelung des Zugmauls an der Anhängerkupplung zu befürchten ist. Vorteilhafterweise befindet sich die wenigstens eine Öffnung in Schrägstellung im untersten Bereich des Aufnahmekörpers, so dass etwaige Feuchtigkeit, die von oben in den Aufnahmekörper eindringt, nach unten ausfließen kann.

Die wenigstens eine Öffnung hat auch weiterhin den Vorteil, dass beim Aufsetzen von engen Gummikappen eine Entlüftung erfolgt, so dass beim Aufschieben der Gummikappe das zu große Luftvolumen entweichen kann. Umgekehrt hilft die Öffnung beim Abziehen derartiger enger Gummikappen, dass das notwendige Luftvolumen durch die Öffnung nachfließen kann.

Vorteilhafterweise ist der Aufnahmekörper aus Kunststoffmaterial gebildet, beispielsweise Polyethylen, wodurch er nicht nur besonders leicht, sondern auch stabil und alterungsbeständig ausgebildet ist. Alternativ kann er auch aus Metall oder jedem anderen Material ausgebildet sein, das sich insbesondere für die herstellung von Massenartikeln eignet.

Schließlich ist vorteilhaft, dass der Aufnahmekörper (3) wenigstens eine, bevorzugt mehrere Unterbrechungen oder Aussparungen aufweist, wodurch insbesondere dem Kopfabschnitt (7) eine gewisse Verformungselastizität verliehen werden kann.

Weitere Einzelheiten, Merkmale und Vorteile ergeben sich aus der nachfolgenden Beschreibung unter Bezugnahme auf die beigefügten Zeichnungen, in denen
- Fig. 1: eine Schnittansicht durch eine bevorzugte Ausführungsform eines Aufnahmekörpers des erfindungsgemäßen Kombiträgersystems ist;
- Fig. 2: eine Ansicht von oben auf den Aufnahmekörper von Fig. 1 ist;
- Fig. 3: eine perspektivische Ansicht in vergrößertem Maßstab auf den Aufnahmekörper von Fig. 1 ist;
- Fig. 4: eine Schnittansicht des erfindungsgemäßen Aufnahmekörpers von Fig. 1 in Montagestellung an einem Kraftfahrzeuganhänger zeigt;
- Fig. 5: eine Schnittansicht einer weiteren Ausführungsform eines Aufnahmekörpers des erfindungsgemäßen Kombiträgersystems ist;
- Fig. 6: eine Ansicht von oben auf den Aufnahmekörper von Fig. 5 ist;
- Fig. 7: eine Schnittansicht durch den Aufnahmekörper des erfindungsgemäßen Kombiträgersystems analog zu Fig. 5 ist, in den ein Halteteller zur Befestigung des Aufnahmekörpers eingesetzt ist;
- Fig. 8: eine Ansicht des Haltetellers von unten ist, der in
- Fig. 9: im Schnitt dargestellt ist.

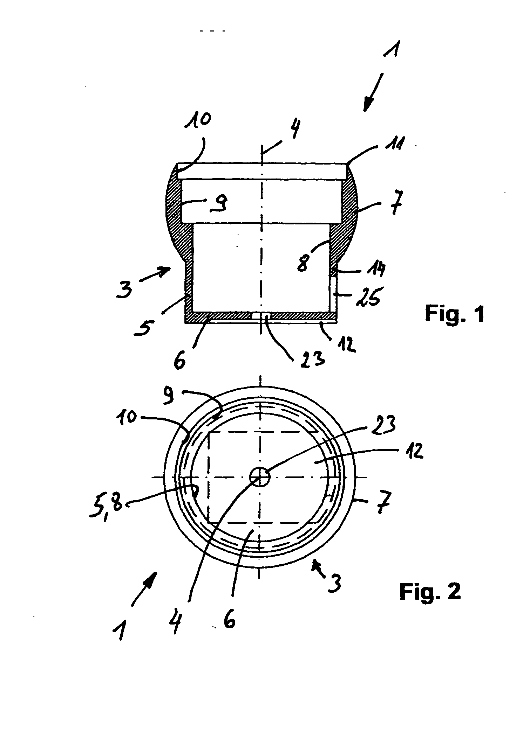

In Fig. 1 ist in Schnittansicht eine bevorzugte Ausführungsform eines erfindungsgemäßen Kombiträgersystems 1 dargestellt, das einen Aufnahmekörper 3 aufweist, der drehsymmetrisch mit einer Symmetrieachse 4 ausgebildet ist. Der Aufnahmekörper 3 weist einen Basisabschnitt 5 auf, der zylinderförmig ausgebildet ist. Der Basisabschnitt wird unten von einer Bodenwand 6 begrenzt.

Weiterhin weist der Aufnahmekörper 3 einen Kopfabschnitt 7 auf, der kugel- oder pilzförmig ausgebildet ist. Über den Kopfabschnitt 7 kann eine Schutzkappe einer Anhängerkupplung gestülpt werden und dort lösbar gelagert werden.

Wie aus Fig. 1 ersichtlich ist der Aufnahmekörper 3 insgesamt hülsenförmig ausgebildet, wobei er drei Abschnitte unterschiedlichen Innendurchmessers aufweisen kann. Ein erster Abschnitt 8 ist im Kopfabschnitt 7 ausgebildet und weist einen Innendurchmesser auf, der gleich dem Innendurchmesser des Basisabschnitts 5 ist. Oberhalb des ersten Abschnitts 8 ist im Kopfabschnitt 7 ein zweiter Abschnitt 9 vorgesehen, der einen gegenüber dem ersten Abschnitt 8 vergrößerten Innendurchmesser aufweist. Schließlich ist oberhalb des zweiten Abschnitts 9 ein dritter Abschnitt 10 vorgesehen, dessen Innendurchmesser größer als der des zweiten Abschnitts 9 ist.

Den herkömmlichen 7-poligen Stecker deutscher Norm gibt es in zwei Ausführungsformen, einer zylindrischen und einer konischen. Von den Hängerherstellern werden die beiden Formen wahlweise verbaut, je nach dem welcher im Einkauf günstiger, aktuell lieferbar etc. ist. Der zylindrische 7-polige Stecker kann somit in den ersten Abschnitt 8 eingesteck werden und erstreckt sich dann bis in den Basisabschnitt 5 hinein. Bei konischer Ausführungsform des 7-poligen Steckers wird dieser ebenfalls in dem ersten Abschnitt 8 aufgenommen und liegt auch an der Innenwand des dritten Abschnitts an.

Der in seinem Außendurchmesser größere dreizehn-polige Anschlußstecker nach europäischer Norm kann in den zweiten Abschnitt 9 eingesetzt werden, wobei dieser Anschlußstecker einen Anschlagflansch aufweist, der nach Einstecken in Anlage an den oberen Ringabschnitt 11 des Kopfabschnitts 7 gelangt.

In der Unterseite der Bodenwand 6 ist eine Ausnehmung 12 vorgesehen, dessen Höhe aus Fig. 1 und dessen Gestalt aus Fig. 2 (gestrichelt) ersichtlich ist, in der der erfindungsgemäße Aufnahmekörper 3 in Draufsicht dargestellt ist. Weiter ist in der Bodenwand 6 eine zentrale Öffnung 23 vorgesehen, die zur Aufnahme eines Befestigungsmittels dient, wie dies weiter unten näher erläutert wird.

In der Seitenwand 14 des Basisabschnitts 5 ist eine Be- und Entlüftungs- und Entwässerungsöffnung 25 vorgesehen. Sie erstreckt sich bis zur Bodenwand 6.

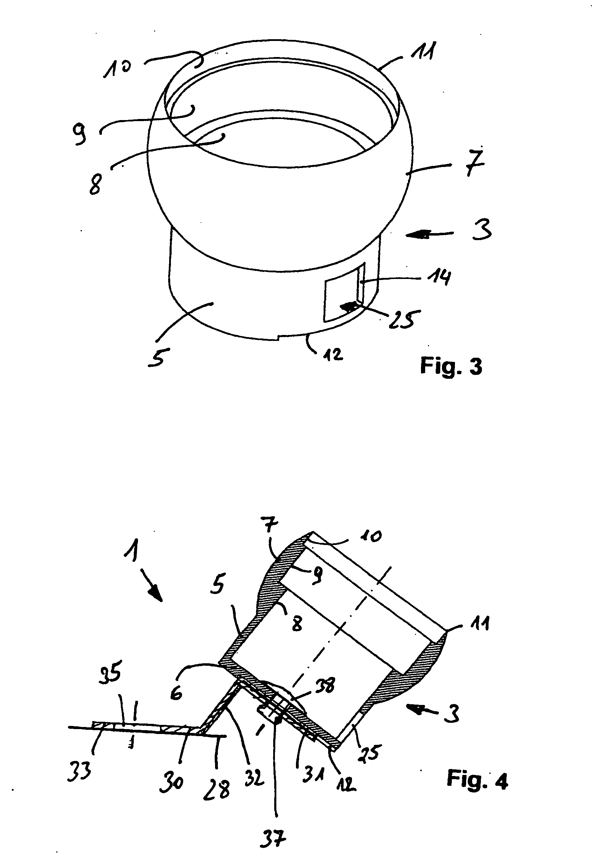

In Fig. 3 ist der Aufnahmekörper 3 der Fig. 1 und 2 in perspektivischer Darstellung gezeigt, wodurch seine Ausgestaltung noch deutlicher wird.

In Fig. 4 ist das erfindungsgemäße Kombiträgersystem 1 in seiner Montagestellung auf einem Kraftfahrzeuganhänger bzw. seiner schematisch angedeuteten Deichsel 28 dargestellt. Vorne an der Deichsel eines Hängers befindet sich das Zugmaul, daß zum Anhängen des Hängers in Eingriff mit der Anhängerkupplung des Kraftfahrzeugs gebracht wird. Das Zugmaul ist üblicherweise mit zwei Schrauben an der Deichsel 28 befestigt. Mittels der dem Hänger zugewandten Schraube kann das Kombiträgersystem an dem Hänger montiert werden. Auf eine zusätzliche Befestigungseinrichtung kann deshalb vorteilhafterweise verzichtet werden.

Zur Befestigung des Aufnahmekörpers 3 an der Deichsel 28 dient eine abgewinkelte Lasche 30 aus Metall oder Kunststoff, die im dargestellten Beispielsfall einen Endabschnitt 31, der in Verbindung mit dem Aufnahmekörper 3 gebracht ist, einen dazu abgewinkelten Mittenabschnitt 32 und einen dazu ebenfalls abgewinkelten Endabschnitt 33 aufweist. Letzterer weist eine Bohrung 35, die zur Aufnahme der entsprechenden Befestigungsschraube (nicht dargestellt) des Zugmauls des Hängers, wie oben beschrieben, dient.

Die Schrägstellung des Aufnahmekörpers dient einerseits dazu, genügend Platz für die Betätigung des Griffs des Zugmauls freizulassen und andererseits dazu, eventuell von oben in den Aufnahmekörper 3 eingedrungene Flüssigkeit und Schmutzpartikel durch die an unterer Stelle zu liegen kommende Öffnung 25 wieder ausfließen bzw. herausfallen zu lassen. Dies wird auch durch die Ausrichtung Öffnung 25 zu der Ausnehmung 12 sichergestellt. Vorteilhafterweise ist die Öffnung 25 deshalb rechteckförmig ausgebildet, wie insbesondere aus Fig. 3 ersichtlich.

Der Endabschnitt 31 ist im Beispielsfall von Fig. 4 mittels einem Niet 37 mit dem Aufnahmekörper 3 bzw. dessen Bodenwand 6 verbunden. Vorteilhafterweise handelt es sich um einen Großkopfniet mit großem Kopf 38, durch den die gegenüber der Bodenwand 6 aus Kunststoff aufgebrachte Flächenpressung reduziert bzw. angreifende Zugkräfte weiter verteilt werden.

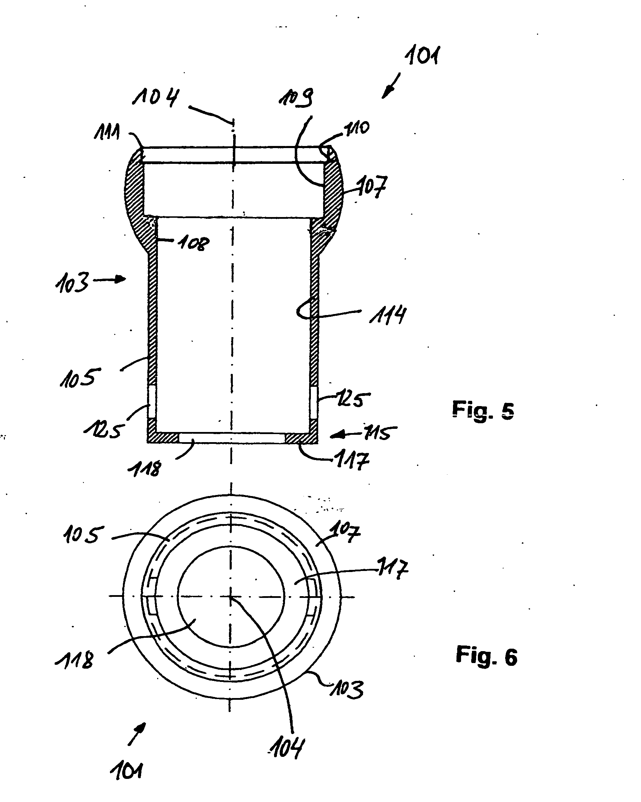

In Fig. 5 ist in Schnittansicht eine weitere Ausführungsform eines erfindungsgemäßen Kombiträgersystems 101 dargestellt, das einen Aufnahmekörper 103 aufweist, der drehsymmetrisch mit einer Symmetrieachse 104 ausgebildet ist. Der Aufnahmekörper 103 weist einen Basisabschnitt 105 auf, der zylinderförmig ausgebildet ist. Weiterhin weist der Aufnahmekörper 103 einen Kopfabschnitt 107 auf, der kugel- bzw. pilzförmig ausgebildet ist.

Wie aus Fig. 5 ersichtlich ist der Aufnahmekörper 103 insgesamt ebenfalls hülsenförmig ausgebildet, wobei er im Kopfabschnitt 107 ebenfalls einen ersten Abschnitt 108, einen zweiten Abschnitt 109 und einen dritten Abschnitt 110 aufweist. Der Innendurchmesser des ersten Abschnitts 108 fluchtet mit dem Innendurchmesser des Basisabschnitts 105, der Innendurchmesser des zweiten Abschnitts 109 ist größer als jener des ersten Abschnitts 108 und der innendurchmesser des dritten Abschnitts 110 ist größer als jener des zweiten Abschnitts 109. Damit können die drei oben beschriebenen elektrischen Anschlußstecker ebenfalls wahlweise aufgenommen werden.

Bei dem in den Basisabschnitt 105 einsteckbaren Anschlußstecker mit Außendurchmesser, der dem Innendurchmesser des Basisabschnitts 105 entspricht bzw. geringfügig kleiner ist, kann es sich um den herkömmlichen 7-poligen Stecker nach der deutschen Norm handeln.

In den Kopfabschnitt 107 kann andererseits der 13-polige Anschlußstecker nach europäischer Norm eingesetzt werden, wobei dieser einen Anschlagflansch aufweist, der nach Einstecken in Anlage an den oberen Ringabschnitt 111 des Kopfabschnitts 107 gelangt.

An dem dem Kopfabschnitt 107 gegenüberliegenden Ende des Basisabschnitts 105 ist ein Befestigungsbereich 115 vorgesehen. Dieser weist im dargestellten Ausführungsbeispiel einen ringförmigen nach innen vorspringenden Flansch 117 auf, der eine Innenausnehmung 118 aufweist.

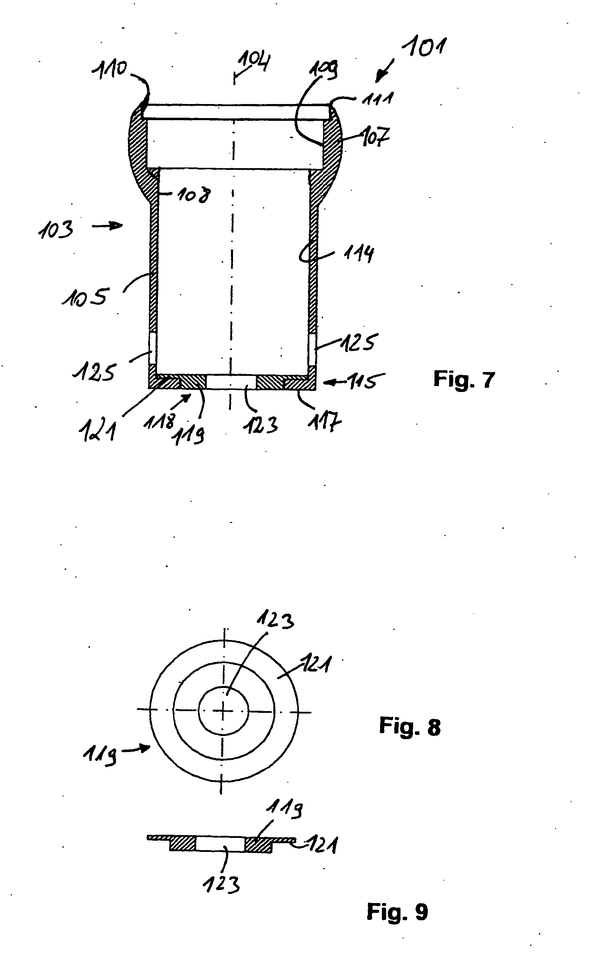

Wie aus Fig. 7 ersichtlich, ist zur Befestigung des hülsenförmigen Aufnahmekörpers 103 ein scheibenförmiger Halteteller 119 vorgesehen, der in eine Innenausnehmung 118 eingesetzt ist. Dieser weist einen ringförmigen Halteflansch 121 auf, der in Anlage an den ringförmigen Flansch 117 des Befestigungsbereichs 115 kommt. Der Halteteller weist, wie auch aus den Fig. 4 und 5 ersichtlich, eine Innenöffnung 123 auf, durch die eine Befestigungsschraube (nicht dargestellt) durchsteckbar ist, womit das Kombiträgersystem 101 an einen Kraftfahrzeuganhänger bzw. an dessen Deichsel befestigbar ist. Der Halteteller 119 ist in Fig. 8 in Draufsicht und in Fig. 9 im Schnitt dargestellt.

Vorteilhafterweise schließt die Unterseite des Haltetellers 119 eben mit der Unterseite des Befestigungsbereichs 115 ab.

In den nach oben offenen hülsenförmigen Aufnahmekörper 103 kann, wenn weder ein Anschlußstecker eingesteckt noch eine Schutzkappe aufgesteckt ist, Schmutz und insbesondere Regenwasser eindringen. Um Flüssigkeit und gegebenenfalls kleinere Schmutzpartikel aus dem hülsenförmigen Aufnahmekörper 103 wieder auszubringen, ist wenigstens eine Öffnung 125, im dargestellten Ausführungsbeispiel zwei Öffnungen 125 in der Seitenwand 114 des Basisabschnitts 105 vorgesehen, die im Ausführungsbeispiel im wesentlichen rechteckförmig ausgebildet sind. Durch diese Öffnungen kann das oben eingedrungene Wasser wieder hinausfließen.

Die Öffnungen 125 können auch für das Hindurchstecken einer Schraub- oder Schlauchklemme dienen, die zum Befestigen des Aufnahmekörpers 103 dienen kann.

Vorteilhafterweise ist der Aufnahmekörper 103 aus Kunststoff, beispielsweise Polyethylen, ausgebildet und der ringförmige Flansch 117 ist einstückig mit dem Basisabschnitt 105 ausgebildet. Der Halteteller 119 kann beispielsweise aus Metall gebildet sein, wodurch eine besonders solide Befestigung erzielbar ist.

Die vorliegende Erfindung ist nicht auf das dargestellte Ausführungsbeispiel beschränkt. Insbesondere kann die Befestigung des Aufnahmekörpers 3 bzw. 103 durch alternative Ausführungen, wie Kleben, Schweißen, Nieten, durch Kabelbinder, eine Schnapp- oder Arretierscheibe, ein Zwischen- oder Umlenkblech erfolgen. Grundsätzlich kann jede geeignete lösbare oder unlösbare Verbindung eingesetzt werden.

Weiterhin kann der Flansch 117 auch soweit vorspringen, dass die Innenausnehmung 118 der Innenöffnung 123 des Haltetellers entspricht, so dass dieser wegfallen kann. Auch kann anstelle eines Haltetellers eine vorzugsweise wenigstens dreiarmige Halteklammer oder -klammerscheibe verwendet werden.

## Patentansprüche

1. Kombiträgersystem für Kraftfahrzeuganhänger, mit einem hülsenförmigen Aufnahmekörper (3), der einen zylinderförmigen Basisabschnitt (5) und einen Kopfabschnitt (7) aufweist, der eine pilzförmige Außenkontur aufweist, die derart angepasst ist, dass sie zur Aufnahme einer Schutzkappe für die Anhängerkupplung geeignet ist, wobei der hülsenförmige Aufnahmekörper (3) eine zumindest teilweise an die Außenkontur von elektrischen normierten nach alter deutscher Norm 7-poligen und/oder nach europäischer Norm. 13-poligen Anschtußsteckern von Kraftfahrzeuganhängern angepaßte Innenkontur (8, 9, 10) aufweist und der Basisabschnitt (5) an einem Kraftfahrzeuganhänger mittels eines Befestigungsmittels, wie einer anschraubbaren Lasche (30), befestigbar ist.

2. Kombiträgersystem nach Anspruch 1, **dadurch gekennzeichnet, dass** der Kopfabschnitt (7) einen ersten Abschnitt (8) aufweist, dessen Innendurchmesser im wesentlichen gleich groß wie der Innendurchmesser des Basisabschnitts (5) ist, und wenigstens einen weiteren, zweiten Abschnitt (9) aufweist, dessen Innendurchmesser größer als der des Basisabschnitts (5) ist.

3. Kombiträgersystem nach Anspruch 2, **dadurch gekennzeichnet, dass** der Kopfabschnitt (7) einen dritten Abschnitt (10) aufweist, dessen Innendurchmesser größer ist als der des zweiten Abschnitts (9).

4. Kombiträgersystem nach einem der Ansprüche 1 bis 3, **dadurch gekennzeichnet, dass** der Basisabschnitt (5) eine Bodenwand (6) aufweist, mit einer zentralen Öffnung (23) für den Durchtritt eines Befestigungsmittels.

5. Kombiträgersystem nach Anspruch 4, **dadurch gekennzeichnet, dass** in der Unterseite der Bodenwand (6) des Basisabschnitts (5) eine Ausnehmung (12) vorgesehen ist, die zur Aufnahme eines Endabschnitts (31) einer Verbindungslasche (30) dient, die ihrerseits zur Verbindung des Basisabschnitts (5) mit einem Kraftfahrzeuganhänger dient.

6. Kombiträgersystem nach einem der Ansprüche 1 bis 5, **dadurch gekennzeichnet, dass** der Basisabschnitt (5) wenigstens eine Öffnung (25) in seiner
Seitenwand (14) in der Nähe der Bodenwand (6) aufweist.

7. Kombiträgersystem nach einem der Ansprüche 1 bis 6, **dadurch gekennzeichnet, dass** der Aufnahmekörper (7) in seiner Montagestellung am Kraftfahrzeuganhänger schräg angeordnet ist.

8. Kombiträgersystem nach einem der Ansprüche 1 bis 7, **dadurch gekennzeichnet, dass** der Aufnahmekörper (3) aus einem Kunststoffmaterial, vorzugsweise Polyethylen, gebildet ist.

9. Kombiträgersystem nach einem der Ansprüche 1 bis 8, **dadurch gekennzeichnet, dass** der Aufnahmekörper (3) wenigstens eine, bevorzugt mehrere Unterbrechungen oder Aussparungen aufweist.

## Claims

1. Combined carrier system for vehicle trailers having a receiving element (3) in the form of a socket, comprising a cylindrically shaped base section (5) and a head section (7) having an external shape in the form of a mushroom, constructed in such a way that it can serve to receive a protective cap for the trailer coupling, whereby the receiving element (3) in the form of a socket has an internal contour (8, 9, 10) that is at least partially compatible with the outer contour of electrical 7-pole plugs of vehicle trailers in accordance with a previous German standard and/or of 13-pole plugs of vehicle trailers in accordance with European standards, and the base section (5) can be secured to vehicle trailer by means of a securing means, such as a bolt-on shackle (30).

2. Combined carrier system in accordance with Claim 1 above, **characterised in that** the head section 7 has an initial section (8), the inner diameter of which is essentially equal in size to that of the base section (5), and has at least one further section (9), the inner diameter of which is greater than that of the base section (5).

3. Combined carrier system in accordance with Claim 2 above, **characterised in that** the head section (7) comprises a third section (10), the inner diameter of which is greater than that of the second section (9).

4. Combined carrier system in accordance with any one of the above claims 1 to 3, **characterised in that** the base section (5) has a floor plate (6) with a central opening (23) for the passage of a securing means.

5. Combined carrier system in accordance with Claim 4 above, **characterised in that** in the lower side of the floor plate (6) of the base section (5) there is a groove (12) that serves to accommodate the end section (31) of a connecting shackle (30), which in turn serves to connect the base section (5) with a vehicle trailer.

6. Combined carrier system in accordance with any of the above claims 1 to 5, **characterised in that** the base section (5) has at least one opening (25) in its side wall (14) in the vicinity of the floor plate (6).

7. Combined carrier system in accordance with any of the above claims 1 to 6, **characterised in that** the receiving element (3) is arranged obliquely at an angle when installed on the vehicle trailer.

8. Combined carrier in accordance with any of the above claims 1 to 7, **characterised in that** the receiving element (3) is made of a plastic material, preferably polyethylene.

9. Combined carrier in accordance with any of the above claims 1 to 8, **characterised in that** the receiving element (3) comprises at least one and preferably a number of interruptions or grooves.

## Revendications

1. Support combiné pour remorques de véhicules automobiles, comprenant un corps de réception (3) en forme de manchon, qui présente une section de base (5) cylindrique et une section de tête (7) pourvue d'un contour extérieur fongiforme, lequel contour est adapté de telle sorte qu'il se prête à recevoir un capuchon de protection pour l'attelage de remorque, le corps de réception (3) en forme de manchon présentant un contour intérieur (8, 9, 10) adapté, au moins en partie, au contour extérieur de fiches de raccordement électriques normalisées, suivant l'ancienne norme allemande, à 7 pôles et/ou, suivant la norme européenne, à 13 pôles, de remorques de véhicules automobiles, et la section de base (5) pouvant être fixée sur une remorque de véhicule automobile à l'aide d'un moyen de fixation, tel qu'une éclisse (30) à visser.

2. Support combiné suivant la revendication 1, **caractérisé en ce que** la section de tête (7) présente une première section (8), dont le diamètre intérieur est essentiellement égal au diamètre intérieur de la section de base (5), et au moins une deuxième section (9) supplémentaire, dont le diamètre intérieur est plus grand que celui de la section de base (5).

3. Support combiné suivant la revendication 2, **caractérisé en ce que** la section de tête (7) présente une troisième section (10), dont le diamètre intérieur est plus grand que celui de la deuxième section (9).

4. Support combiné suivant l'une des revendications 1 à 3, **caractérisé en ce que** la section de base (5) présente une paroi de fond (6), pourvue d'une ouverture centrale (23) pour le passage d'un moyen de fixation.

5. Support combiné suivant la revendication 4, **caractérisé en ce qu'**un creux (12) est prévu dans le côté inférieur de la paroi de fond (6) de la section de base (5), lequel creux sert à recevoir une section extrême (31) d'une éclisse de raccordement (30), qui sert pour sa part à assembler la section de base (5) avec une remorque de véhicule automobile.

6. Support combiné suivant l'une des revendications 1 à 5, **caractérisé en ce que** la section de base (5) présente au moins une ouverture (25) dans sa paroi latérale (14) au voisinage de la paroi de fond (6).

7. Support combiné suivant l'une des revendications 1 à 6, **caractérisé en ce que** le corps de réception (7) est disposé en oblique dans sa position de montage sur la remorque de véhicule automobile.

8. Support combiné suivant l'une des revendications 1 à 7, **caractérisé en ce que** le corps de réception (3) est formé d'une matière plastique, de préférence de polyéthylène.

9. Support combiné suivant l'une des revendications 1 à 8, **caractérisé en ce que** le corps de réception (3) présente au moins une, de préférence plusieurs interruptions ou évidements.
